# EUROPEAN PATENT APPLICATION

(11) **EP 4 009 542 A1**
(43) Date of publication of application: **08.06.2022**
(21) Application number: 20211238.9
(22) Date of filing: 02.12.2020
(51) Int. Cl.: H04B 7/185

(54) **MODULATION SYSTEM AND MODULATION METHOD FOR MODULATING A SATELLITE UPLINK SIGNAL**

(71) Applicant: Rohde & Schwarz GmbH & Co. KG, 81671 München (DE)
(72) Inventor: Erhard, Mathias, 81671 München (DE)
(74) Representative: Prinz & Partner mbB

(57) **Abstract**

A modulation system (10) for modulating a satellite uplink signal is described. The modulation system (10) comprises at least one computer device (12). The at least one computer device (12) comprises an input interface (21), at least one software modulation module (22), and at least one processing unit (20). The input interface (21) is configured to receive at least one input signal. The software modulation module (22) comprises program code means that are configured to modulate the at least one input signal when the software modulation module (22) is executed on the at least one processing unit (20), thereby generating at least one IQ baseband data carrier (IQBBDC) signal based on the at least one input signal. Further, a modulation method for modulating a satellite uplink signal is described.

## Description

The invention generally relates to a modulation system for modulating a satellite uplink signal. The invention further relates to a modulation method for modulating a satellite uplink signal.

Modulation systems for modulating a satellite uplink signal usually comprise several hardware modulators that modulate one or several input signals. The corresponding modulated signals are merged into a single central frequency band, for example into the L-band.

The merged signal is usually converted into an optical signal by an RF-to-optical converter, and the optical signal is transmitted to the target location (for example an antenna for satellite communication) by means of optical cables. The optical signal is converted back into the L-band at the target location, and is up-converted into the actual transmission band, e.g. the Ku-band.

Thus, there are several signal conversion steps, which comprise an RF-to-optical conversion and an optical-to-RF conversion. The corresponding converters and the optical cables are rather costly and thus raise the manufacturing costs (capital expenditure - CAPEX) as well as the operational costs (operational expenditure - OPEX) of such modulation systems.

Thus, there is a need to provide a modulation system for modulating a satellite uplink signal that is more cost-efficient.

The invention provides a modulation system for modulating a satellite uplink signal. The modulation system comprises at least one computer device. The at least one computer device comprises an input interface, at least one software modulation module, and at least one processing unit. The input interface is configured to receive at least one input signal. The software modulation module comprises program code means that are configured to modulate the at least one input signal when the software modulation module is executed on the at least one processing unit, thereby generating at least one IQ baseband data carrier (IQBBDC) signal based on the at least one input signal.

Therein, the at least one input signal may be associated with a data stream, such as an audio stream and/or a video stream, that is to be transmitted via satellite. Particularly, the at least one input signal may be associated with a television signal that is to be transmitted via satellite. For example, the modulation system may be established as a DVB-Sx modulation system.

The invention is based on the idea to modulate the at least one input signal by means of the software modulation module instead of using hardware modulators as in the state-of-the-art, thereby reducing the costs, particularly CAPEX and/or OPEX.

Accordingly, the at least one IQBBDC signal is a digital signal that can be transmitted to a target destination, e.g. to an antenna for satellite communication, without a prior conversion to an optical signal. For example, usual Ethernet components may be used for transmitting the at least one IQBBDC signal, which are considerably less expensive than their optical counterparts are.

As no RF-to-optical converters and no optical-to-RF converters are necessary for transmitting the at least one IQBBDC signal to the target location, the modulation system according to the present invention can be manufactured at a reduced costs.

Moreover, the modulation system according to the present invention can easily be up-scaled by providing several copies of the software modulation module, which may be executed on the at least one processing unit or on several processing units.

The computer device may comprise a memory, and the at least one software modulation module may be saved in the memory.

According to an aspect of the present invention, the computer device is established as a server. The server may be part of a user-side network or of an external network, for instance a wide area network (WAN) and/or a local area network (LAN). Particularly, the server may be part of a computational cloud, such that the user of the modulation system does not have to purchase an own server.

According to another aspect of the present invention, the computer device comprises several software modulation modules and/or several processing units, wherein the several software modulation modules and/or the several processing units are configured to generate at least two different IQBBDC signals based on the at least one input signal. For example, the computer device may receive several input signals and may generate a respective IQBBDC signal for each of the input signals. Alternatively or additionally, the software modulation module may generate multiple IQBBDC signals based on a single input signal.

In an embodiment of the present invention, the modulation system comprises an amplifier module and a connecting interface, wherein the connecting interface connects the computer device with the amplifier module, and wherein the connecting interface is configured to transmit the at least one IQBBDC signal from the computer device to the amplifier module. Therein and in the following, the term "connecting interface" is understood to comprise all hardware and software means that are necessary in order to transmit the at least one IQBBDC signal from the computer device to the amplifier module. Accordingly, the connecting interface may comprise corresponding network cards, connecting cables, and connectors for connecting the cables to the computer device and to the amplifier module.

In a further embodiment of the present invention, the connecting interface is configured to transmit the at least one IQBBDC signal based on a packet-oriented protocol. For example, the connecting interface is configured to transmit the at least one IQBBDC signal based on Ethernet10G, Ethernet100G, and/or VITA49.2. Of course, any other suitable transmission protocol for transmitting digital data may be used as well.

The connecting interface may be configured to convert the at least one IQBBDC signal based on the used transmission protocol on the computer-device side in order to transmit the at least one IQBBDC signal from the computer device to the amplifier module. The connecting interface may further be configured to convert the transmitted signal back to the original IQBBDC signal on the amplifier module-side.

According to another aspect of the present invention, the connecting interface is configured to transmit several IQBBDC signals individually. In other words, the individual IQBBDC signals may not be merged into a single signal, but are transmitted independent from each other. Thus, an individual target destination may be chosen for each IQBBDC signal, as the individual IQBBDC signals are not merged with each other. Particularly, the individual IQBBDC signals may be transmitted via one or several cables that connect the computer device with one or several IQBBDC signal destination(s).

In a further embodiment of the present invention, the amplifier module comprises a mixer module, wherein the mixer module comprises at least one mixer unit being configured to up-convert the at least one IQBBDC signal to an intermediate frequency, thereby generating an intermediate frequency signal. In general, the intermediate frequency signal has a predefined frequency range, wherein the predefined frequency range is associated with a transmission frequency range that is allocated to the respective IQBBDC signal.

The mixer module may comprise at least one local oscillator signal input that is configured to receive a local oscillator signal. The at least one mixer unit may be configured to up-convert the at least one IQBBDC signal to the intermediate frequency by mixing the IQBBDC signal with the local oscillator signal.

Moreover, the mixer module may comprise at least one filter unit being associated with the at least one mixer unit, wherein the filter unit is configured to remove unwanted frequency components from the intermediate frequency signal.

Particularly, the intermediate frequency signal is established as a digital signal. Accordingly, the local oscillator signal may be established as a numerically controlled oscillator signal. Moreover, the at least one filter unit may be established as a digital filter.

Particularly, the mixer module comprises at least one gain unit being associated with the at least one mixer unit, wherein the at least one gain unit is configured to adapt a gain of the at least one IQBBDC signal. In other words, the at least one gain unit is configured to adapt a signal level of the at least one IQBBDC signal, such that the signal level of the at least one IQBBDC signal is appropriate for subsequent processing steps, particularly appropriate for the subsequent processing steps that are described in more detail below.

The at least one gain unit may be provided upstream of the at least one mixer unit.

According to an aspect of the present invention, the mixer module comprises several mixer units, the several mixer units being associated with different IQBBDC signals. Particularly, the mixer module may comprise a mixer unit for each IQBBDC signal received from the computer device. Thus, each IQBBDC signal may be up-converted to a different intermediate frequency by the several mixer units, for example according to a transmission frequency plan comprising designated frequency bands for each IQBBDC signal.

According to another aspect of the present invention, the mixer module comprises a summation unit, wherein the summation unit is configured to sum the intermediate frequency signals generated by the several mixer units, thereby generating an aggregated multi-carrier sum signal. Thus, the aggregated multi-carrier sum signal comprises all of the intermediate frequency signals. However, the intermediate frequency signals may have frequency ranges that are different from each other, such that the individual intermediate frequency signals can still be extracted from the aggregated multi-carrier sum signal by appropriate (frequency) filtering.

The aggregated multi-carrier sum signal may also be denoted as an up-mixed sum signal.

Since the amplifier module comprises the mixer module, the amplifier module is configured to digitally aggregate the intermediate frequency signals into the aggregated multi-carrier sum signal, namely the up-mixed sum signal.

In a further embodiment of the present invention, the amplifier module comprises an IQ modulation unit, wherein the IQ modulation unit is configured to up-convert the aggregated multi-carrier sum signal to a target transmission frequency band, thereby generating a transmission signal. In general, the target transmission frequency band corresponds to a frequency band that is suitable for wireless transmission of the transmission signal to a satellite. Particularly, the target transmission band may be the Ku-band. However, it is to be understood that the aggregated multi-carrier sum signal may be up-converted to any other frequency band that is suitable for wireless transmission to a satellite.

The amplifier module may comprise an amplifier unit, wherein the amplifier unit is configured to amplify the transmission signal, particularly wherein the amplifier unit is established as a high-power amplifier. In other words, the amplifier unit raises a signal level of the transmission signal to a signal level that is suitable for wireless transmission of the transmission signal to a satellite.

According to an aspect of the present invention, the amplifier module comprises a digital-to-analog converter upstream of the IQ modulation unit, wherein the digital-to-analog converter is configured to convert the aggregated multi-carrier sum signal into an analog aggregated multi-carrier sum signal. Thus, the IQ modulation unit is established as an analog modulation unit. The IQ modulation unit is configured to modulate the analog aggregated multi-carrier sum signal, thereby generating an analog transmission signal.

Moreover, the amplifier unit described above may be configured to amplify the analog transmission signal.

According to another aspect of the present invention, the amplifier module comprises a pre-distortion filter upstream of the IQ modulation unit, wherein the pre-distortion filter is configured to filter the aggregated multi-carrier sum signal based on a predefined spectrum mask. The pre-distortion filter may remove unwanted distortion components from the aggregated multi-carrier sum signal. Moreover, the pre-distortion filter may shape the aggregated multi-carrier sum signal according to a predefined specification, particularly according to a predefined customer specification. Hence, the pre-distortion filter is located downstream of the summation unit that generates the aggregated multi-carrier sum signal.

The pre-distortion filter may be provided upstream of the digital-to-analog converter described above.

According to the invention, the problem further is solved by a modulation method for modulating a satellite uplink signal. The modulation method comprises the following steps:
- providing a computer device, the computer device comprising an input interface, a software modulation module, and at least one processing unit;
- receiving at least one input signal by means of the input interface;
- modulating the at least one input signal by executing the software modulation module on the at least one processing unit, thereby generating at least one IQ baseband data carrier (IQBBDC) signal based on the at least one input signal.

Particularly, the modulation system described above is configured to perform the modulation method.

Regarding the advantages and further properties of the modulation method, reference is made to the explanations given above with respect to the modulation system, which also hold for the modulation method and vice versa.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows a modulation system according to the present invention; and
- Figure 2 shows a flow chart of a modulation method according to the present disclosure.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

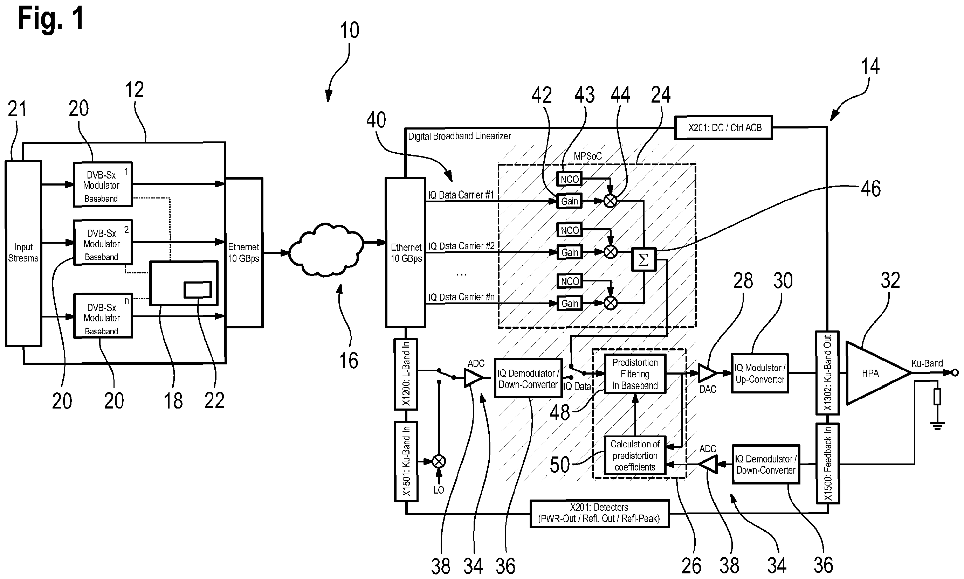

Figure 1 schematically shows a modulation system 10 for modulating a satellite uplink signal.

The modulation system 10 comprises a computer device 12, an amplifier module 14, and a connecting interface 16 that is located between the computer device 12 and the amplifier module 14.

Therein and in the following, the term "module" is understood to describe suitable hardware, suitable software, or a combination of hardware and software that is configured to have a certain functionality.

The hardware may, inter alia, comprise a CPU, a GPU, an FPGA, an ASIC, or other types of electronic circuitry.

The computer device 12 and the amplifier module 14 are connected to each other in a signal transmitting manner by means of the connecting interface 16.

Therein and in the following, the term "connecting interface" is understood to comprise all hardware and software means that are necessary in order to transmit signals from the computer device 12 to the amplifier module 14.

Accordingly, the connecting interface 16 may comprise corresponding network cards, connecting cables, and connectors for connecting the cables to the computer device 12 and to the amplifier module 14.

The computer device 12 is established as a server. The server may be part of a user-side network or of an external network, for instance a wide area network (WAN) and/or a local area network (LAN). Particularly, the computer device 12 may be part of a computational cloud.

The computer device 12 comprises a memory 18, several processing units 20 that are connected to the memory 18, and an input interface 21.

The several processing units 20 may be established as different processors and/or as different cores of a single processor.

The memory 18 comprises at least one software modulation module 22 that is saved in the memory 18.

The functionality of the software modulation module 22 will be described in more detail below.

The amplifier module 14 comprises a mixer module 24, a filter module 26, a digital-to-analog converter 28, an IQ modulation unit 30, and an amplifier unit 32.

The amplifier module 14 may further comprise a feedback module 34 with at least one IQ demodulation unit 36 and at least one analog-to-digital converter 38 being associated with the at least one IQ demodulation unit 36.

The mixer module 24 comprises several mixing channels 40. Each of the mixing channels 40 comprises a gain unit 42, a local oscillator input 43, and a mixer unit 44.

The mixer module 24 further comprises a summation unit 46 that is connected to each of the mixer units 44.

The filter module 26 comprises a pre-distortion filter 48 and a coefficient module 50, wherein the coefficient module 50 is configured to adapt filter parameters of the pre-distortion filter 48.

The pre-distortion filter 48 is connected to the summation unit 46 downstream of the summation unit 46.

The digital-to-analog converter 28 is connected to the pre-distortion filter 48 downstream of the pre-distortion filter 48.

The IQ modulation unit 30 is connected to the digital-to-analog converter 28 downstream of the digital-to-analog converter 28.

The amplifier unit 32 is connected to the IQ modulation unit 30 downstream of the IQ modulation unit 30.

In general, the modulation system 10 is configured to receive input signals that are associated with a respective data stream, for example a respective audio stream, video stream and/or digital television stream. The modulation system 10 further is configured to modulate the received input signals such that they are adapted for wireless transmission to a satellite.

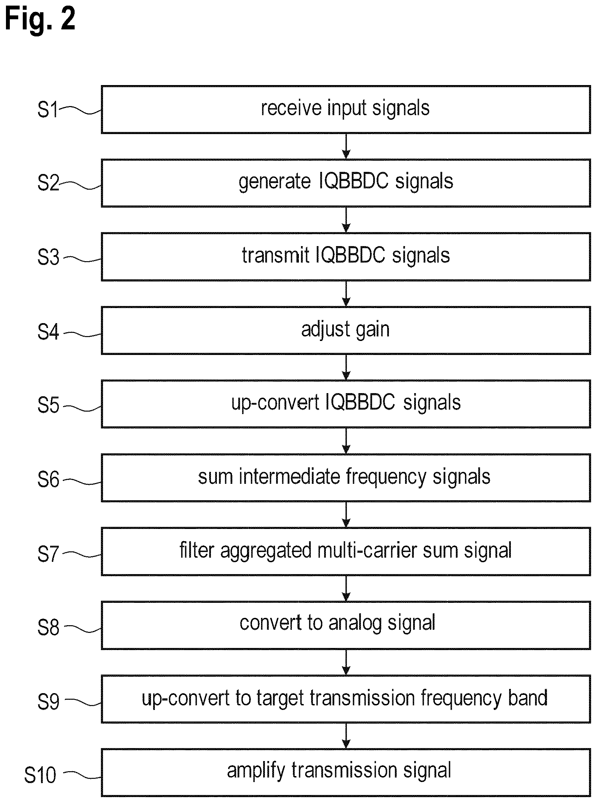

More precisely, the modulation system 10 is configured to perform a modulation method for modulating a satellite uplink signal that is described in the following with reference to Figure 2.

Several input signals are received by means of the computer device 12, more precisely by means of the input interface 21 of the computer device 12 (step S1).

Each of the input signals is associated with a data stream, such as an audio stream and/or a video stream, that is to be transmitted via satellite. Particularly, the input signals are associated with a digital television signal that is to be transmitted via satellite.

Each of the several input signals is forwarded to one of the processing units 20, respectively.

The input signals are modulated by means of the at least one software modulation module 22, thereby generating a respective IQ baseband data carrier (IQBBDC) signal based on each of the input signals (step S2).

More precisely, the at least one software modulation module 22 comprises program code means that are configured to modulate the received input signals when the software modulation module 22 is executed on the processing units 20.

The IQBBDC signals are transmitted to the amplifier module 14 by means of the connecting interface 16 (step S3).

Particularly, the IQBBDC signals are transmitted from the computer device 12 to the amplifier module 14 individually. In other words, the individual IQBBDC signals may not be merged into a single signal, but are transmitted independent from each other.

In general, the connecting interface 16 transmits the IQBBDC signals based on a packet-oriented protocol.

For example, the connecting interface 16 transmits the IQBBDC signals based on Ethernet10G, Ethernet100G, and/or VITA49.2. Of course, any other suitable transmission protocol for transmitting digital data may be used as well.

The connecting interface 16 may be configured to convert the IQBBDC signals based on the used transmission protocol on the computer-device side in order to transmit the IQBBDC signals from the computer device 12 to the amplifier module 14.

The connecting interface 16 may further be configured to convert the transmitted signals back to the original IQBBDC signals on the amplifier module-side.

Each of the received IQBBDC signals is forwarded to one of the mixing channels 40.

A respective gain of the received IQBBDC signal is adjusted by means of the gain units 42 (step S4).

Therein, the respective signal levels of the IQBBDC signals are adjusted as appropriate for the further processing steps described in the following.

The individual IQBBDC signals are up-converted to a respective intermediate frequency by means of the mixer units 44, thereby generating a respective intermediate frequency signal based on each of the IQBBDC signals (step S5).

More precisely, the mixer units 44 up-convert the IQBBDC signals to the respective intermediate frequency by mixing the IQBBDC signal with a (numerically controlled) local oscillator signal received by means of the local oscillator input 43.

In general, the intermediate frequency signals each have a predefined frequency range, wherein the predefined frequency range is associated with a transmission frequency band that is allocated to the respective IQBBDC signal.

Particularly, each IQBBDC signal may be up-converted to a different intermediate frequency by the several mixer units 44, for example according to a transmission frequency plan.

The intermediate frequency signals are summed by means of the summation unit 46, thereby generating an aggregated multi-carrier sum signal (step S6).

The aggregated multi-carrier sum signal is forwarded to the filter module 26, more precisely to the pre-distortion filter 48.

The aggregated multi-carrier sum signal is filtered by means of the pre-distortion filter 48 based on a pre-defined spectrum mask, thereby generating a filtered multi-carrier sum signal (step S7).

The pre-defined spectrum mask may be configured such that the pre-distortion filter 48 removes unwanted distortion components from the aggregated multi-carrier sum signal.

Alternatively or additionally, the pre-defined spectrum mask may be configured such that the pre-distortion filter 48 shapes the aggregated multi-carrier sum signal according to a predefined specification, particularly according to a predefined customer specification.

The filtered multi-carrier sum signal is forwarded to the digital-to-analog converter 28.

The digital-to-analog converter 28 converts the filtered multi-carrier sum signal into an analog signal, thereby generating an analog multi-carrier sum signal (step S8).

The analog multi-carrier sum signal is forwarded to the IQ modulation unit 30.

The analog multi-carrier sum signal is up-converted to a target transmission frequency band by means of the IQ modulation unit 30, thereby generating a transmission signal (step S9).

In general, the target transmission frequency band corresponds to a frequency band that is suitable for wireless transmission of the transmission signal to a satellite.

Particularly, the target transmission band may be the Ku-band. However, it is to be understood that the analog multi-carrier sum signal may be up-converted to any other frequency band that is suitable for wireless transmission to a satellite.

The transmission signal is forwarded to the amplifier unit 32.

The transmission signal is amplified by means of the amplifier unit 32, thereby generating an amplified transmission signal (step S10).

In general, the amplifier unit 32 raises a signal level, i.e. a power level of the transmission signal to a signal level that is suitable for wireless transmission of the transmission signal to a satellite.

The amplified transmission signal may be forwarded to an antenna or an antenna array for transmission to one or several satellites.

Optionally, the feedback module 34 may receive feedback signals from the satellite or from the antenna. The feedback signals may be forwarded to the coefficient module 50, particularly after a demodulation by means of the at least one IQ demodulation unit 36 and an analog-to-digital conversion by means of the at least one analog-to-digital converter 38.

The coefficient module 50 may adapt the filter coefficients of the pre-distortion filter 48, i.e. the spectrum mask of the pre-distortion filter, based on the feedback signals received.

With the modulation system 10 described above, the IQBBDC signals can be transmitted to the target destination, i.e. to the amplifier module 14, without a prior conversion to an optical signal, which is the usual approach in the state of the art.

For example, usual Ethernet components may be used for transmitting the IQBBDC signals, which are considerably less expensive than their optical counterparts are.

As no RF-to-optical converters and no optical-to-RF converters are necessary for transmitting the IQBBDC signals to the target location, the modulation system 10 described above can be manufactured at a reduced cost.

Moreover, the modulation system 10 described above can easily be up-scaled by providing several copies of the software modulation module 22, which may be executed on the processing units 20 of the computer device 12, and/or by providing more processing units 20 in the computer device 12.

Certain embodiments disclosed herein, particularly the respective module(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A modulation system for modulating a satellite uplink signal, the modulation system (10) comprising at least one computer device (12), the at least one computer device (12) comprising an input interface (21), at least one software modulation module (22), and at least one processing unit (20),
wherein the input interface (21) is configured to receive at least one input signal,
wherein the software modulation module (22) comprises program code means that are configured to modulate the at least one input signal when the software modulation module is executed on the at least one processing unit (20), thereby generating at least one IQ baseband data carrier (IQBBDC) signal based on the at least one input signal.

2. The modulation system of claim 1, **characterized in that** the computer device (12) is established as a server.

3. The modulation system according to any of the preceding claims, **characterized in that** the computer device (12) comprises several software modulation modules (22) and/or several processing units (20), wherein the several software modulation modules (22) and/or the several processing units (20) are configured to generate at least two different IQBBDC signals based on the at least one input signal.

4. The modulation system according to the preceding claims, **characterized in that** the modulation system (10) comprises an amplifier module (14) and a connecting interface (16), wherein the connecting interface (16) connects the computer device (12) with the amplifier module (14), and wherein the connecting interface (16) is configured to transmit the at least one IQBBDC signal from the computer device (12) to the amplifier module (14).

5. The modulation system of claim 4, **characterized in that** the connecting interface (16) is configured to transmit the at least one IQBBDC signal based on a packet-oriented protocol.

6. The modulation system of claim 4 or 5, **characterized in that** the connecting interface (16) is configured to transmit several IQBBDC signals individually.

7. The modulation system of according to any of the claims 4 to 6, **characterized in that** the amplifier module (14) comprises a mixer module (24), wherein the mixer module (24) comprises at least one mixer unit (44) being configured to up-convert the at least one IQBBDC signal to an intermediate frequency, thereby generating an intermediate frequency signal.

8. The modulation system of claim 7, **characterized in that** the mixer module (24) comprises at least one gain unit (42) being associated with the at least one mixer unit (44), wherein the at least one gain unit (42) is configured to adapt a gain of the at least one IQBBDC signal.

9. The modulation system of claim 7 or 8, **characterized in that** the mixer module (24) comprises several mixer units (44), the several mixer units (44) being associated with different IQBBDC signals.

10. The modulation system according to claim 9, **characterized in that** the mixer module (24) comprises a summation unit (46), wherein the summation unit (46) is configured to sum the intermediate frequency signals generated by the several mixer units (44), thereby generating an aggregated multi-carrier sum signal.

11. The modulation system according to claim 10, **characterized in that** the amplifier module (14) comprises an IQ modulation unit (30), wherein the IQ modulation unit (30) is configured to up-convert the aggregated multi-carrier sum signal to a target transmission frequency band, thereby generating a transmission signal.

12. The modulation system according to claim 11, **characterized in that** the amplifier module (14) comprises an amplifier unit (32), wherein the amplifier unit (32) is configured to amplify the transmission signal, particularly wherein the amplifier unit (32) is established as a high-power amplifier.

13. The modulation system according to claim 11 or 12, **characterized in that** the amplifier module (14) comprises a digital-to-analog converter (28) upstream of the IQ modulation unit (30), wherein the digital-to-analog converter (28) is configured to convert the aggregated multi-carrier sum signal into an analog aggregated multi-carrier sum signal.

14. The modulation system according to any one of the claims 11 to 13, **characterized in that** the amplifier module (14) comprises a pre-distortion filter (48) upstream of the IQ modulation unit (30), wherein the pre-distortion filter (48) is configured to filter the aggregated multi-carrier sum signal based on a predefined spectrum mask.

15. A modulation method for modulating a satellite uplink signal, the modulation method comprising the following steps:
- providing a computer device (12), the computer device (12) comprising an input interface (21), a software modulation module (22), and at least one processing unit (20);
- receiving at least one input signal by means of the input interface (21);
- modulating the at least one input signal by executing the software modulation module (22) on the at least one processing unit (20), thereby generating at least one IQ baseband data carrier (IQBBDC) signal based on the at least one input signal.
